# EUROPEAN PATENT APPLICATION

(11) **EP 3 096 244 A1**
(43) Date of publication of application: **23.11.2016**
(21) Application number: 15382254.9
(22) Date of filing: 18.05.2015
(51) Int. Cl.: G06F 17/30

(54) **A COMPUTER IMPLEMENTED METHOD, A SYSTEM AND COMPUTER PROGRAMS FOR OFFLINE BROWSING OF WEB APPLICATIONS**

(71) Applicant: Telefonica Digital España, S.L.U., 28013 Madrid (ES)
(72) Inventor: Coloma, Daniel, 28013 Madrid (ES); Schneider, Michael, 28013 Madrid (ES)
(74) Representative: Carlos Hernando, Borja

(57) **Abstract**

A computer implemented method, a system and computer programs for offline browsing of web applications

The method comprises initiating, by a client computing device, a web application through a web engine (100) running on said client computing device; and checking, by said web engine (100), a register relative to said web application listing the resources needed by the web application to work offline, said register further including an indication that push notifications are going to be used by the web application for triggering updates thereof and an URL of a web server (200), said updates being triggered by the web server (200) by requesting a push server (300) to send said push notifications to the web engine (100).

## Description

### Field of the art

The present invention is directed, in general, to web technologies. In particular, the invention relates to a computer implemented method, to a system and to computer programs for offline browsing of web applications, where a register relative to a web application besides listing the resources needed by the web application to work offline also includes an indication that push notifications are going to be used by the web application for triggering updates thereof.

### Background of the invention

In the beginning, web applications were designed to run in a web engine, such as a browser, and work when connectivity was available.

During the last years, web technologies have been used for broader use cases, that require, in some situations, the capability to access a Web Site (also known as web application, i.e. a set of resources including one or more web pages that are made available through the Internet) without having connection, by using, for instance a previously "cached" version.

Many of the solutions, still require the web engine to check for new versions every time the web application is accessed, which requires in many cases the consumption of data connectivity without any result, and that in some cases imply a billing charge to end-users/clients, especially in mobile networks where data connectivity is in many situations metered by the amount of data downloaded/uploaded.

*Application Cache, or in short Appcache,* is the technology that was defined by the World Wide Web Consortium (W3C) and implemented by nearly all the web engines available in the market. *Appcache* requires web applications to use a *cache manifest file,* from now on termed as register, which is a list of all of the resources that the web application might need to use when there is no network connectivity. The *appcache* register must be declared explicitly in the HTML code of the web application by including a link to the cache manifest file.

The register is fully specified within the W3C standard, but it basically consists in a list of resources categorized in three different buckets:
- "Explicit cached" resources: They will get downloaded and cached locally, and will be used in place of their online counterparts whenever a client is disconnected from the network.
- "Network" resources: They will never cached and will not be available offline.
- "Fallback" resources: It is useful to provide alternatives for online resources that could not be cached or were not cached successfully.

When the web engine accesses a web application which HTML points to register, two situations might happen:
1. The web engine has never seen that register before. The register will be downloaded as well as the resources listed in the register itself. When all the resources are downloaded, the web engine will flag the web application as "cached" and available to be used without connection.
2. The web engine has already seen that register. This means it may already have some resources in the *appcache,* or even the entire working offline web application in it. Because of this, the web engine checks if the register has changed since the last time it checked it. Again, two situations might occur:
   A. If the register has not changed, the web engine will continue using the old one.
   B. If the register has changed, the web engine will start re-downloading every single resource listed in the register. When all resources listed in the register have been re-downloaded successfully, the web engine will tag the new fully version of the register as ready to be used offline. It has to be noted that this new version would not be in use unless the client refreshes the page or accesses it again.

Apart from that, push notifications are a technology that allows an application to be woken up to receive notifications. There are many different push notification variants, usually linked to the environment of use. For instance, smartphone's operating systems (iOS®, Android®, etc.) usually have an associated proprietary push notifications system. In the realm of the web, and specifically of the web applications, i.e. applications running in a web engine such as a web browser, there is a push notifications standard which, as of the date of writing this patent application, is being drafted by the W3C, namely the W3C Push API.

Once of the key problems of *appcache* is that every time a web application is used, the web engine will check if the register has changed or not. This requires an HTTP Request and in case web applications not frequently updated but used often, it could be a significant amount of resources wasted.

Additionally, because of the *appcache* design, when a change occurs in a web application, the new version won't be available immediately to clients but only after a refresh on the web application is performed.

The last potential problem is that web engines also cache HTTP resources (using classic HTTP cache -no *appcache*). This means, that in some situations, developers might change the *appcache* register, but because of HTTP caching web engines perform, clients won't be able to use the new version of the Web Site until the cached content expires.

Another alternative is creating packaged web applications, where all the resources of the web application are delivered as package (e.g. a zip file) and the web application is distributed via alternative mechanisms (e.g. An application store). In this case, as the web application is not hosted as Web Site, the updates must be managed in another way (e.g. via the application store), by doing this, the developer of the web application loses the control of the application publishing and updating.

### Summary of the Invention

Embodiments of the present invention provide in accordance with a first aspect a computer implemented method for offline browsing of web applications, comprising initiating, by a client computing device, a web application through a web engine (e.g. a browser) running on said client computing device; and checking, by said web engine, a register relative to said web application listing the resources needed by the web application to work offline.

Contrary to the know proposals, said register further includes: an indication that push notifications are going to be used by the web application for triggering updates thereof, and an URL of a web server (e.g. run by the developer of the web application) responsible of the triggering of said updates by requesting a push server to send said push notifications to the web engine.

In accordance with the proposed method, when the web engine receives for a first time the register, first it will register into the push server using a push client service. As a result of said registration, the web engine will receive, from the push server, information required by the web server to request said sending to the push server, i.e. to request the sending of push notifications. Finally, the web engine will transmit the received information to the URL of the web server.

Preferably, the information required by the web server to request the sending of push notification is a push endpoint, i.e. a special unique URL being a specific resource in the push server associated to that specific web application.

In accordance with an embodiment, said information is transmitted to the URL of the web server together with an identifier of the web application, preferably the URL of the register.

When a state associated with the web application is updated on the web server, in accordance with the proposed method, the web server will send a request to the push server to send a push notification. The push notification will be transmitted by the push server to the web engine, hence, as a result of the reception of the push notification, the web engine will be able to update the register and the resources listed therein according to the updated state, without any client interaction.

In accordance with an embodiment, the updating is performed by means of the web engine downloading an updated version of the register. Consequently, it will be triggered the download of the resources listed in the register.

In addition, the push notification may further include an updated version of the register as part of its payload, said updating being performed by means of triggering the download of the resources listed in the register included in the push notification payload.

In accordance with another embodiment, the updating step also comprises the removal of the un-updated version of the register from an HTTP cache of the web engine.

Other embodiments of the invention that are disclosed herein also include a system and software programs to perform the method embodiment steps and operations summarized above and disclosed in detail below. More particularly, a computer program product is one embodiment that has a computer usable medium including computer usable program code encoded thereon that when executed on at least one processor in a computer system causes the processor to perform the operations indicated herein as embodiments of the invention.

Present invention does not require the need to check for updates every time the web application is used, as the push notification will trigger the update instead, and only when changes occur.

Besides, every time the client opens the web application it will have the latest available version, as the update will happen in the background after the push notification is received. This for instance, avoids the need of having a "hot swap" to allow clients to change the current web application for a new one when the web application is used.

Further, some problems caused by HTTP cache can be circumvented. In fact HTTP cache may avoid new versions of the appcache register to be fetched. Receiving push notifications about appcache register updates avoids the web engine missing new versions of the appcache register. Even in case the browser HTTP cache does not allow the update of the appcache register to happen seamlessly, the web engine could at least notify to the client that a new version is available and ask him to clear the cache or perform alternative actions to mitigate the problem.

### Brief Description of the Drawings

The previous and other advantages and features will be more deeply understood from the following detailed description of embodiments, with reference to the attached, which must be considered in an illustrative and non-limiting manner, in which:
Fig. 1 is a flow diagram illustrating the process followed by the web engine when parsing, i.e. checking, the proposed register.
Fig. 2 is a flow diagram illustrating the process followed by the present invention to notify changes associated to the web application from the web server to the web engine in accordance with an embodiment.

### Detailed Description of the Invention and of Several Embodiments

The present invention introduces an extension to appcache, so that a web server 200 can indicate a web engine 100 (e.g. a browser) running on a client computing device (e.g. a Smartphone, a PC, a tablet, a notebook, among any other personal computing device composed by one or more processors, a memory, an input/output interface, a network interface, etc.), not illustrated, the support of server initiated updates of the appcache resources of a hosted web application. Therefore, according to the present invention, the appcache cache manifest file, herein termed as register, besides listing the resources needed by said web application to work offline, further includes an URL of said web server 200 and an indication that push notifications are going to be used by the web application for triggering updates thereof.

In an embodiment, not limitative as other ways to achieve the same target could be identified with different syntactical changes to *appcache,* the proposed register includes a section called "PUSH", which contains the URL of the web server 200 where information required by the web server 200 to request the sending of a push notification to a push server 300 (e.g. a push endpoint) has to be sent. Therefore, the web server 200 can send a push notification to that push endpoint later on when updates of the web application are available, and as a result the push server 300 can forward the push notification to the web engine 100. Different approaches to include this information in the register without deviating from the purpose of the invention may be possible. For instance, a possible example is shown below with the changes to the "standard" format written in italics and underlined:

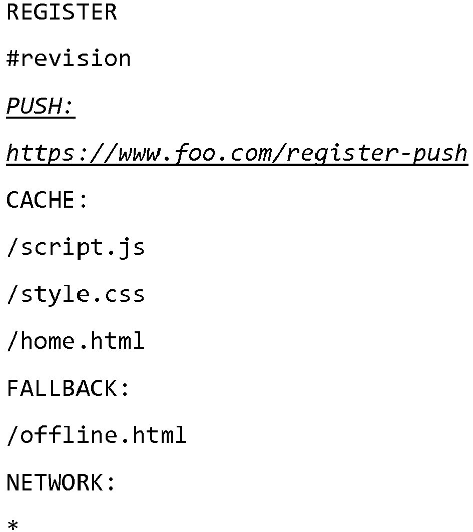

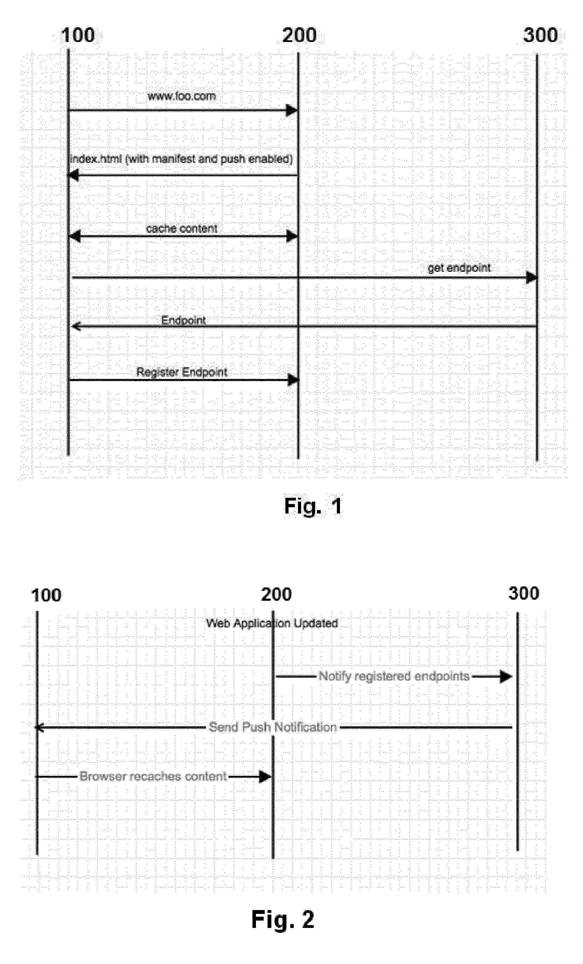

When the web engine 100 downloads the web application from the web server 200 and checks the proposed register for the first time (see Fig. 1), it will cached the corresponding content as instructed by the register and automatically, according to an embodiment, use a push client service such as the W3C Push API to register to the push server 300 and receive said push endpoint. That registration will allow the web engine 100 to receive notifications from the push server 300. Then, the web engine 100 will transmit the received push endpoint to the URL of the web server 200. The protocol through which the web engine 100 transmits the push endpoint to the web server 200 is illustrative and could be defined in a different way or even extended to provide more information.

Moreover, in an embodiment, the web engine 100 transmits, together with said transmission of the received push endpoint, an identifier of the web application (preferably the URL of the register) to the web server 200, so that the web server 200 can identify the specific web application to which this communication refers. It has to be noted that it might be possible that the web server 200 hosts multiple web applications and hence this is needed. An example of how this information can be transmitted from the web engine 100 to the web server 200 is for instance via a POST HTTP Request (showed in italics and underlined in the example below):

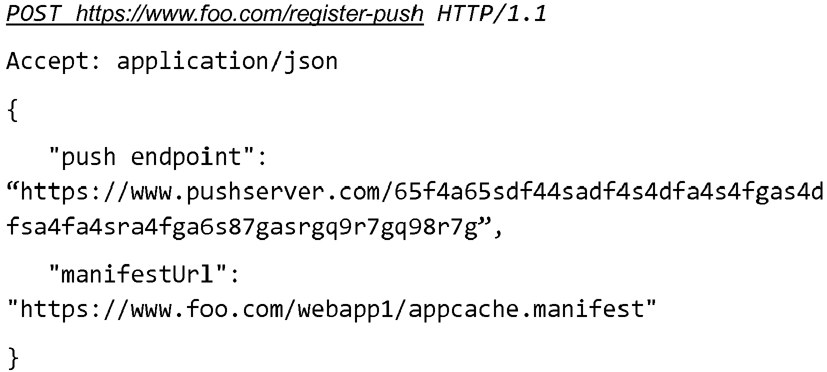

The use of the W3C Push API has been selected by the present invention as the seamless way to do it in a web environment. However, the use of this Push protocol/API is only illustrative as other ways to send notifications from a server to a web engine 100 could be used.

The push server 300, in the case of the proposed method using the Push protocol, may be selected by the web server 200, so the web server 200 can decide the push server 300 that will send the push notifications. The web server 200 could even decide to deploy his own push server 300. The information of the push server 300 to use may be included in a different element in the proposed register. If none is specified, the web engine 100 will use the default push server 300.

When a change occurs in the web application (see Fig. 2), i.e. a state of the web application is updated in the web server 200, the web server 200 will send a push notification via the push server 300 to all the push endpoints that the web engine 100 have registered. When the push notification is received in the web engine 100, the web engine 100 can accordingly update, for instance by means of automatically issuing an HTTP request, without client/user interaction, the proposed register and the resources listed therein, by downloading an updated version of the proposed register and also by triggering the download of the resources listed therein.

Next time the client access the web application, there is no need to check for updates as the latest version would be also available and immediately accessible to him/her.

The push notification may further include a payload in order to minimize the number of interactions with the web server 200. The payload could be for instance an updated version of the proposed register so it is delivered together with the push notification.

In an embodiment, the web engine 100 upon the reception of the push notification also removes the old register (the un-updated one) from an HTTP Cache thereof. Consequently, the problem described about HTTP Caching overlapping with App Caching is bypassed.

The web server 200 and/or the push server 300 may include, but are not limited to, one or more processors, a network interface, memory and an input/output interface.

The proposed invention may be implemented in hardware, software, firmware, or any combination thereof. If implemented in software, the functions may be stored on or encoded as one or more instructions or code on a computer usable medium.

As used herein, computer program products comprising computer usable medium including all forms of computer usable program code except, to the extent that such media is deemed to be non-statutory, transitory propagating signals.

The above merely describes the embodiments of the present disclosure, which are not intended to limit the scope of the present disclosure. Various modifications and alternations can be made to the present disclosure by a person with ordinary skill in the art. Any modifications, replacements and improvements within the scope of the spirit and principle of the present disclosure should fall within the scope of the claims of the present disclosure.

## Claims

1. A computer implemented method for offline browsing of web applications, comprising:
- initiating, by a client computing device, a web application through a web engine (100) running on said client computing device; and
- checking, by said web engine (100), a register relative to said web application listing the resources needed by the web application to work offline,
the method being **characterized in that** said register further includes an indication that push notifications are going to be used by the web application for triggering updates thereof and an URL of a web server (200), said updates being triggered by the web server (200) requesting a push server (300) to send said push notifications to the web engine (100).

2. The computer implemented method of claim 1, wherein the web engine (100) comprises executing the following actions:
- registering into the push server (300) using a push client service and receiving, as a result of said registration, information required by the web server (200) to request said sending to the push server (300); and
- transmitting the received information to the URL of the web server (200).

3. The computer implemented method of claim 2, wherein the information required by the web server (200) is a push endpoint.

4. The computer implemented method of claim 2 or 3, wherein the web engine (100) also transmits to the URL of the web server (200), together with the received information, an identifier of the web application.

5. The computer implemented method of claim 4, wherein the identifier of the web application is the URL of the register.

6. The computer implemented method of any of previous claims, wherein a state associated with the web application is updated in the web server (200), the method comprising:
- transmitting, by the web server (200), to the push server (200), a request to send a push notification;
- sending, by the push server (300), the push notification to the web engine (100); and
- updating, by the web engine (100), as a result of the reception of the push notification, said register and the resources listed in the register according to the updated state.

7. The computer implemented method of claim 6, wherein said updating is performed by means of the web engine (100) downloading an updated version of the register and the method further comprising triggering the download of the resources listed in the register.

8. The computer implemented method of claim 7, wherein the updating step comprises removing the un-updated version of the register from an HTTP cache of the web engine (100).

9. The computer implemented method of claim 6, wherein the push notification further includes an updated version of the register as part of its payload, and wherein said updating is performed by means of triggering the download of the resources listed in the register included in the push notification payload.

10. A system for offline browsing of web applications, comprising:
a client computing device arranged and configured to initiate a web application through a web engine (100) running on said client computing device; and
said web engine (100) comprising a controller arranged and configured to check a register relative to said web application listing the resources needed by the web application to work offline,
the system being **characterized in that** said processing means are further configured to check an indication, included in said register, that push notifications are going to be used by the web application for triggering updates thereof and an URL of a web server (200), the web server (200) being adapted and configured to trigger said updates by requesting a push server (300) to send said push notifications to the web engine (100).

11. A computer program product comprising a computer usable medium including computer usable program code for offline browsing of web applications, said computer program product comprising:
computer usable program code for checking, by a web engine (100) running on a client computing device, a register relative to a web application, said web application being initiated by said client computing device and said register listing the resources needed by the web application to work offline and including an indication that push notifications are going to be used by the web application for triggering updates thereof and an URL of a web server (200), said updates being triggered by the web server (200) requesting a push server (300) to send said push notifications to the web engine (100).

12. The computer program product of claim 11, wherein the web engine (100) comprises:
- registering into the push server (300) using a push client service, and receiving, as a result of the registration, information required by the web server (200) to request said sending to the push server (300); and
- transmitting the received information to the URL of the web server (200).

13. The computer program product of claim 12, wherein the received information is transmitted to the URL of the web server (200) together with an identifier of the web application.

14. The computer program product of claims 11 to 13, further comprising:
computer usable program code for updating, by the web engine (100), as a result of the reception of a push notification from the push server (300), the register and the resources listed in the register according to an updated state of the web application in the web server (200).

15. The computer program product of claim 14, wherein the updating is performed by means of the web engine (100) downloading an updated version of the register.
